# EUROPÄISCHE PATENTSCHRIFT

(11) **EP 1 516 693 B1**
(45) Veröffentlichungstag und Bekanntmachung des Hinweises auf die Patenterteilung: **07.11.2012**
(21) Anmeldenummer: 03021262.5
(22) Anmeldetag: 19.09.2003
(51) Int. Cl.: B23K 26/26, B23K 26/08

(54) **Laserbearbeitungsmaschine zum Erzeugen linearer Schweissnähte und Verfahren zum Erzeugen linearer Schweissnähte an einem Werkstück**
Laser machining machine for producing linear welding seams and process for producing linear welding seams onto a workpiece
Machine d'usinage laser pour produire des joints soudés linéaires et procédé pour produire des joints soudés linéaire sur des pièces

(43) Veröffentlichungstag der Anmeldung: 23.03.2005
(73) Patentinhaber: Trumpf Laser- und Systemtechnik GmbH, 71254 Ditzingen (DE)
(72) Erfinder: Widmann, Dominik, 75378 Bad Liebenzell (DE); Kettner-Reich, Andreas, 70469 Stuttgart (DE)
(74) Vertreter: Kohler Schmid Möbus

(56) Entgegenhaltungen:
- US-A- 4 152 573
- US-A- 4 492 844
- US-A- 4 538 956
- US-A- 4 541 055
- US-A- 4 574 176

## Beschreibung

Die Erfindung betrifft eine Laserbearbeitungsmaschine zum Erzeugen linearer Schweißnähte an einem Werkstück gemäß dem Oberbegriff von Patantanspruch 1 und ein Verfahren zum Laserschweißen von vier Längskanten eines Werkstücks.

Eine derartige Laserbearbeitungsmaschine ist beispielsweise durch die US-A-4541055 bekannt geworden.

Ein hoher Anteil der industriell zu schweißenden Werkstücke sind Gehäuseteile oder Kisten mit linearen Schweißkanten in kleinen und mittleren Losgrößen. Als Schweißverfahren ist für diese Werkstücke in der Regel das Wärmeleitungsschweißen erwünscht, so dass nacharbeitungsfreie Nähte erzeugt werden können.

Die zu verschweißenden Blechkanten entstehen meist durch rechtwinklig aufeinander treffende Blechseiten. Die Verhältnisse an mehreren Längskanten können an einem Werkstück identisch und symmetrisch zu einer Ebene parallel zu den zu verschweißenden Kanten sein. Beispielsweise sind Kisten rechteckigen Querschnitts symmetrisch zu einer Längsmittenebene aufgebaut. Die Nähte verlaufen zudem geradlinig. Häufig weisen die zu verschweißenden Gehäuseteile einen umlaufenden Rand oder Sicken auf.

Derzeit müssen für diese Werkstücke meist aufwändige Spannvorrichtungen gebaut werden, die auf die jeweilige Bearbeitungsaufgabe bzw. das jeweilige Bauteil abgestimmt sind. Bei der Auslegung einer geeigneten Spannvorrichtung sind insbesondere umlaufende Ränder, Falze oder sonstige Umformungen zu berücksichtigen, die beim Einspannen nicht beschädigt werden dürfen.

Alternativ oder ergänzend dazu muss die Schweißoptik während der Bearbeitung verschiedener Längskanten des Werkstücks umgerüstet werden.

Die aus der eingangs genannten US-A-4541055 bekannte Laserbearbeitungsmaschine dient zum Erzeugen linearer Schweißnähte an einem Werkstück und umfasst dazu eine Laserschweißoptik, eine Werkstückauflage und Spannmittel zum Spannen des Werkstücks gegen die Werkstückauflage. Dabei ist die Laserschweißoptik unverschiebbar befestigt und die Werkstückauflage in der XY-Ebene verschiebbar gelagert. Weiterhin ist die Werkstückauflage durch einen drehbaren Auflagetisch gebildet, auf dem aufliegend das Werkstück befestigt wird.

Der Anmelder hat sich daher die Aufgabe gestellt, eine Laserbearbeitungsmaschine der eingangs genannten Art und ein Verfahrens zum einfachen Schweißen von Längskanten eines Werkstücks, insbesondere von Kisten und Gehäuseteilen, bereitzustellen.

Diese Aufgabe wird durch eine Laserbearbeitungsmaschine mit den Merkmalen von Patentanspüruch 1 gelöst. Die modular aufgebaute Spannvorrichtung führt zu einem leicht handhabbaren und kostengünstigen Spannen von Werkstücken.

Von der Erfindung wird jede Art der Relativbewegung zwischen Werkstück und Laserschweißoptik umfasst. Besonders vorteilhaft ist die Linearbewegung der Laserschweißoptik. Aber auch eine Bewegung des Werkstücks ist denkbar.

In einfacher kompakter Ausgestaltung können die Mittel zum Spannen durch zwei Spannbalken ausgebildet sein.

Die Erfindung erlaubt die Bearbeitung von Kisten oder Gehäuseteilen. Die einzelnen Auflageelemente können hinsichtlich ihrer Geometrie auf die Geometrie der Längsseiten der Kisten oder der Gehäuseteile im Bereich der Längskante abgestimmt sein. Durch eine geeignete Auswahl auch hinsichtlich der Anzahl und der Gestaltung der Auflageelemente kann das zu bearbeitende Werkstück optimal gespannt werden. Umlaufende Ränder des Werkstücks können beschädigungsfrei eingespannt werden. Dies kann durch die Positionierung der Auflageelemente unter Berücksichtigung des umlaufenden Randes geschehen. Es können auch entsprechende Ausnehmungen in den Auflageelementen und/oder Spannbalken vorgesehen sein.

Bevorzugt ist das spiegelsymmetrische Spannen eines Werkstücks, d.h. das erneute Spannen nach einer Drehung bezüglich einer quer zur Längsmittenachse (somit auch quer zur Schweißnaht) und durch die Mitte des Werkstücks verlaufenden Drehachse. Das Auflegen des Werkstücks, ausgehend von den beiden freien Enden des Auflagebalkens, ermöglicht dieses spiegelsymmetrische Spannen einer Kiste oder dergleichen. Gegenstand der Erfindung sind daher in Alleinstellung auch eine Vorrichtung und ein Verfahren zur spiegelsymmetrischen Bearbeitung des Werkstücks.

In Weiterbildung der Erfindung können ein Sensor zur Erfassung der Schweißnahtlänge und Mittel zur Speicherung der erfassten Daten vorgesehen sein. Der Sensor oder eine Videokamera und ein Bildverarbeitungssystem erfassen somit einzelne Schweißnahtparameter. Wenn beispielsweise die Nahtlänge durch den Kalibriervorgang erfasst und gespeichert sowie weitere bekannte Parameter wie der Werkstoff eingegeben werden, kann der Schweißvorgang weitgehend automatisch ablaufen.

Die erfindungsgemäße Laserbearbeitungsmaschine kann vorteilhafter Weise in ein Laserbearbeitungsnetzwerk integriert werden. Mithilfe eines sog. Laserbearbeitungsnetzwerks ist es möglich, einen oder mehrere Festkörperlaser mit verschiedenen Bearbeitungsstationen, von denen eine die Laserbearbeitungsmaschine gemäß der Lehre der Erfindung sein kann, zu vernetzen. Im schnellen Wechsel fordern die Arbeitsstationen die benötigte Laserenergie von den im Netzwerk eingebundenen Lasergeräten an. Ziel ist die sichere und intelligente Verteilung der Laserenergie ohne Leistungs- und Strahlqualitätseinschränkungen und damit Optimierung der Auslastung und Verfügbarkeit eines Lasergerätes. Die Verfügbarkeit der Gesamtanlage wird durch die einfache Umsetzung von Redundanzkonzepten gesteigert

Die oben genannte Aufgabe wird auch durch ein Verfahren mit den Merkmalen von Patentanspruch 5 gelöst.

Das Verfahren ermöglicht eine ökonomische Bearbeitung von Kisten oder dergleichen. Eine entsprechende Vorrichtung zur Durchführung des Verfahrens wird daher auch als eigenständige Erfindung angesehen.

In Weiterbildung des Verfahrens kann ein Sensor zur Erfassung der Schweißnahtlänge vorgesehen sein. Dies hat den Vorteil, dass ein noch größerer Automatisierungsgrad erreichbar ist.

Bevorzugt ist das Schweißen ausgehend von einer der Werkstücköffnung, wie beispielsweise der Kistenöffnung, zugeordneten Kante, welche einer dem Werkstückboden zugeordneten Werkstückecke gegenüberliegt, in Richtung dieser Werkstückecke. Dies Werkstückecke stellt den am besten gespannten Teil des Werkstücks dar. Hierdurch wird eine erhöhte Präzision bei der Bearbeitung des Werkstücks erreicht.

Ein Ausführungsbeispiel der Erfindung ist in der Zeichnung schematisch dargestellt und wird nachfolgend mit Bezug zu den Figuren der Zeichnung näher erläutert. Es zeigt:

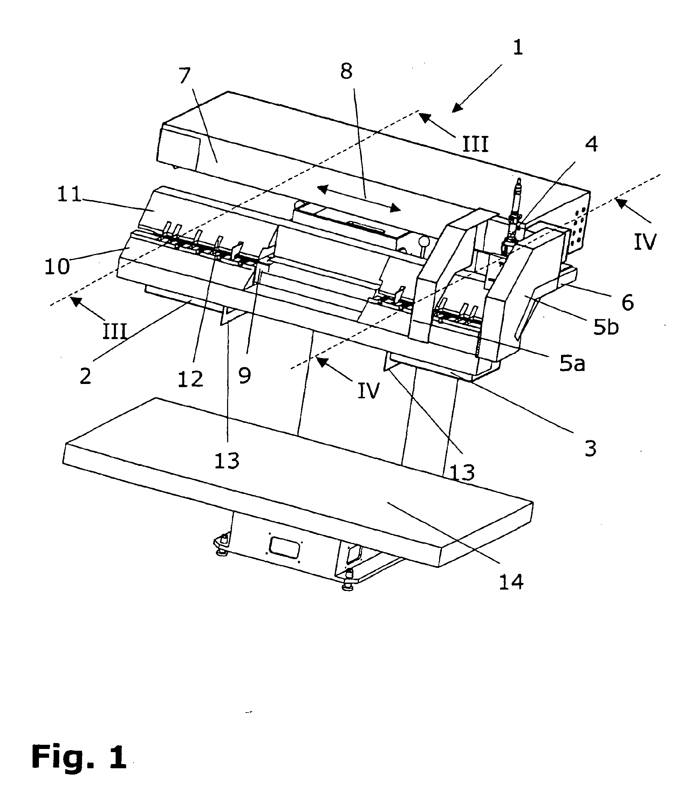

- **Fig. 1**: eine dreidimensionale Ansicht einer Laserbearbeitungsmaschine zum Längskantenschweißen einer Kiste;

Das Ausführungsbeispiel bezieht sich auf eine Kiste mit umlaufendem Rand. An Stelle einer Kiste kann mithilfe der Laserbearbeitungsmaschine 1 auch ein ähnlich aufgebauter Gegenstand, beispielsweise ein Gehäuseteil, mit zu schweißenden linearen Kanten bearbeitet werden.

Die Laserbearbeitungsmaschine 1 zum Schweißen linearer Kanten der Kiste 2 und/oder 3 umfasst eine Laserschweißoptik **4.** Die Laserschweißoptik 4 ist mithilfe einer Haube, umfassend Haubenteile **5a** und **5b,** und einer Führung **6** entlang einer Haubenführung **7** in Richtung einer Linearachse verschiebbar (siehe Doppelpfeil **8**). Die Grundstellung der Laserschweißoptik 4 befindet sich in der Mitte der Laserbearbeitungsmaschine 1. Ausgehend von der Grundstellung kann die Laserschweißoptik 4 zur linken Seite (Kiste 2) oder zur rechten Seite (Kiste 3) bewegt werden. Die Position der Laserschweißoptik 4 ist manuell hinsichtlich Winkellage und Werkstückabstand justierbar.

Die Spannvorrichtung für die beiden Kisten 2 und 3 umfasst im Wesentlichen einen Auflagebalken, mehrere Auflageelemente **9** sowie einen oberen **10** und einen unteren Spannbalken **11**. Der Auflagebalken, auf welchem die Auflageelemente 9 als einzelne Module angeordnet und ausgerichtet werden, ist in der Figur 1 verdeckt und daher nicht sichtbar. Die Spannbalken 10 und 11 weisen Ausnehmungen **12** auf, welche in Längsrichtung gesehen in vorgegebenem Abstand zueinander angeordnet sind. Die beiden Spannbalken 10 und 11 drücken die zu bearbeitenden Kisten 2 und 3 gegen die Auflageelemente 9 bzw. gegen den Auflagebalken. Die Ausnehmungen 12 sind für einen umlaufenden Rand **13** der Kisten 2 und 3 vorgesehen, damit der Rand 13 beim Einspannen der Kiste 2 und 3 nicht beschädigt werden kann. Der Abstand der Ausnehmungen 12 zueinander und die Länge der Auflageelemente 9 sind aufeinander abgestimmt, so dass gängige überstehende Ränder von Kisten oder Sicken oder andere Profilierungen in den Ausnehmungen 12 positioniert werden können.

Die zu bearbeitenden Kisten 2 und 3 können auf den Auflagebalken über die beiden freien Enden des Auflagebalkens aufgeschoben werden.

Nicht sichtbar in der Figur 1 ist ein Sensor zur Erfassung der Länge der Schweißnaht. Der Sensor kann für einen Kalibrierzyklus eingesetzt werden. Die erfassten Daten werden gespeichert und für die weiteren Bearbeitungsprogramme der Laserbearbeitungsmaschine verwendet. Der einzige Parameter, welcher dann noch manuell eingegeben werden muss, betrifft das Material. Alle weiteren Bearbeitungsparameter sind in der Maschine hinterlegbar.

Die Laserbearbeitungsmaschine 1 umfasst weiterhin einen höhenverstellbaren Auflagetisch **14** zur Unterstützung von großen Teilen.
Fig. 1 zeigt eine Laserbearbeitungsmaschine 1 mit einer einzigen Laserschweißoptik 4, welche ausgehend von einer Position in der Mitte der Laserschweißbearbeitungsmaschine 1 (Ruhestellung) nach außen in Richtung der linken oder rechten Seite der Laserschweißbearbeitungsmaschine 1 schweißen kann. An Stelle der einzigen Laserschweißoptik 4 ist es auch denkbar, zwei Laserschweißoptiken einzusetzen, welche jeweils in Richtung der linken bzw. der rechten Seite der Laserschweißbearbeitungsmaschine 1 schweißen können.

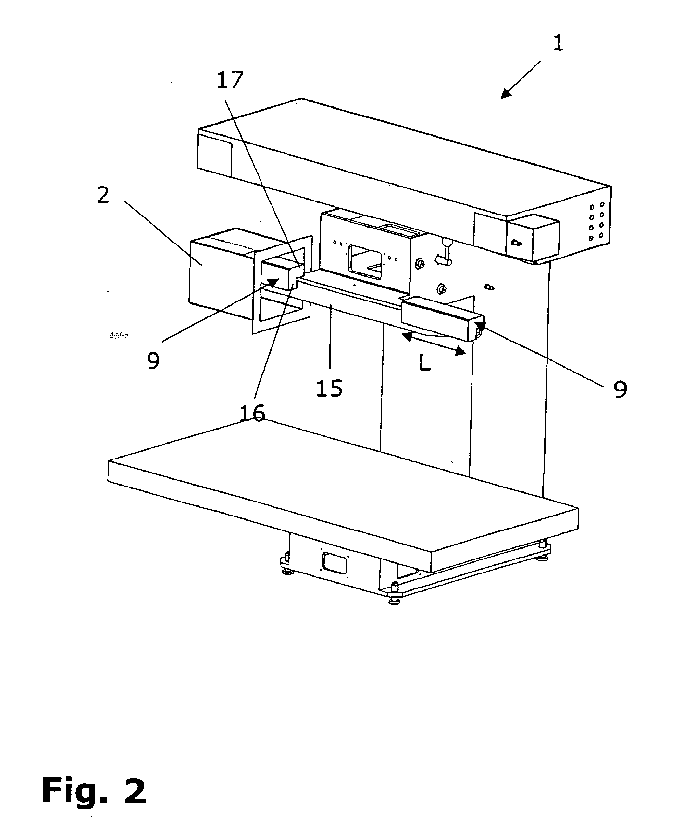

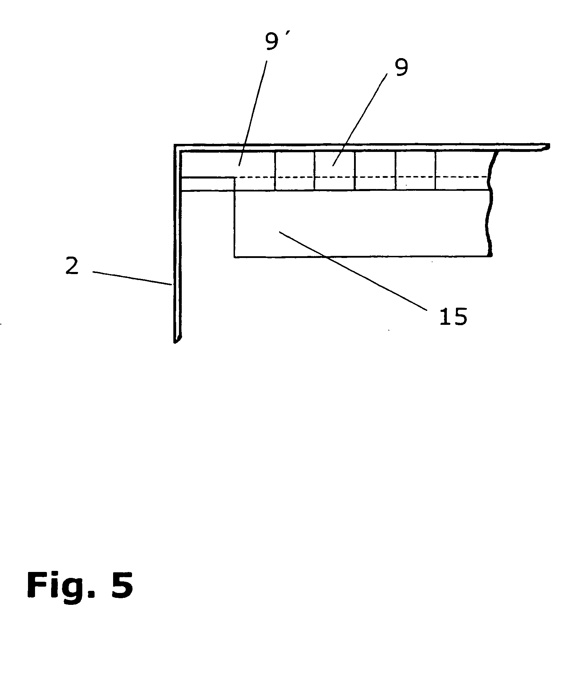

**Fig. 2** unterscheidet sich von Figur 1 durch Ausblenden der Spannbalken, der Laserschweißoptik, der Mittel zur Führung der Laserschweißoptik und einer Kiste, so dass der Auflagebalken **15** sichtbar ist. Auf dem Auflagebalken 15 sind Auflageelemente 9 angeordnet, auf denen die Kiste 2 aufliegt und eingespannt werden kann. Zur Berücksichtigung unterschiedlicher Werkstücklängen, Störkonturen und Nahtgeometrien eines zu bearbeitenden Werkstücks können Auflageelemente 9 unterschiedlicher Länge **L** und unterschiedlicher Anzahl auf dem Auflagebalken 15 positioniert werden (siehe auch **Fig. 5**: Auflageelemente 9, 9'). Die Auflageelemente 9 sind als Winkelprofile ausgebildet, wobei ein Schenkel **16** an dem Auflagebalken 15 anliegt und der andere Schenkel **17** auf dem Auflagebalken 15 aufliegt. Dadurch können die Auflageelemente 9 leicht positioniert werden.

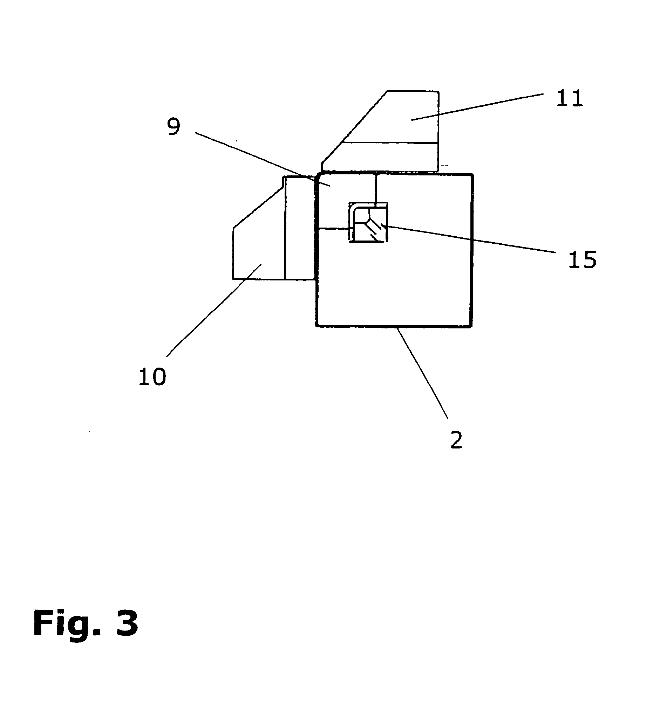

**Fig. 3** zeigt das Einspannen beispielhaft anhand der Kiste 2 durch das Zusammenwirken des Auflagebalkens 15, der Auflageelemente 9 und der Spannbalken 10 und 11. Die Spannbalken 10 und 11 drücken über die Kiste 2 jeweils auf die Außenseiten der Schenkel 16 und 17 der Auflageelemente 9. Das Einspannen der Kiste 3 erfolgt analog.

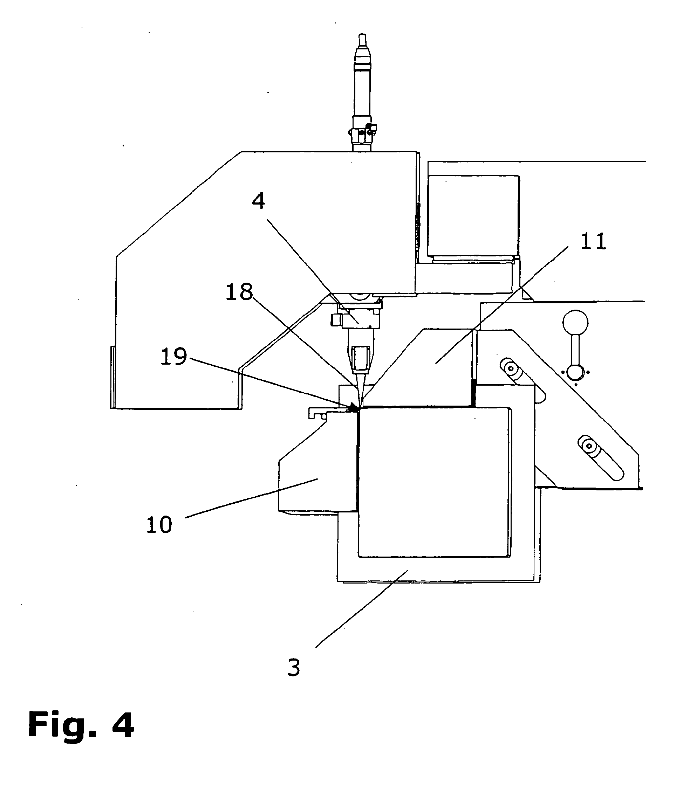

**Fig. 4** verdeutlicht, an welcher Stelle die Kiste 3 geschweißt wird. Die durch Abkanten aus einem Blech entstandene Kiste 3 ist zwischen den Spannbalken 10 und 11 und den Auflageelementen 9 fixiert, so dass ein Laserstrahl **18** eine Längskante **19** der Kiste 3 schweißen kann.

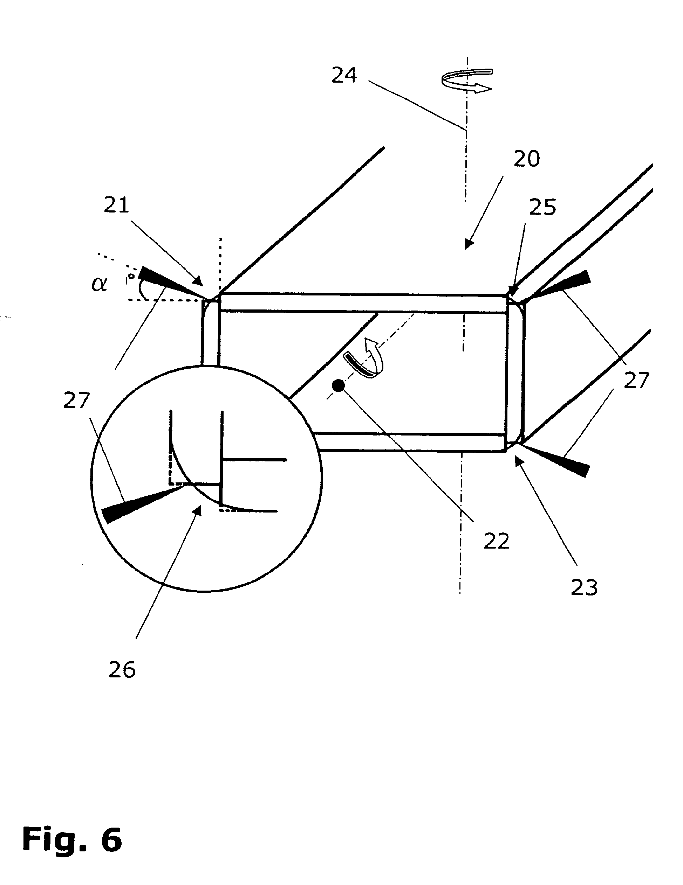

Wenn nun eine Längskante der Kiste geschweißt wurde, muss die Kiste gedreht werden, um die nächste Längskante zu schweißen. Daher betrifft die Erfindung auch ein Verfahren zum Schweißen der Längskanten von Kisten. Zunächst wird eine Kiste **20** gemäß **Fig. 6** eingespannt. Anschließend wird die Längskante **21** eingescannt, und die Daten der Längskante 21 wie die Position und Länge der Naht werden erfasst und gespeichert. Die Laserbearbeitungsmaschine wird auf das lineare Schweißen der Längskante 21 eingestellt und programmiert. Da es sich bei der Kiste um ein symmetrisch aufgebautes Bauteil handelt, sind die Längskanten gleich. Daher wird vorgeschlagen, die Kiste 20 mit einem rechteckigen Querschnitt wie folgt zu bearbeiten: Zuerst wird die Längskante 21 geschweißt. Anschließend wird die Kiste um 180° bezüglich der durch die Längsmittenachse bestimmten Drehachse **22** gedreht. Danach wird die Kiste 20 erneut eingespannt, und die Längskante **23** wird mit der gleichen Zuordnung des Laserstrahls zum Werkstück (Winkel, Abstand) wie bei der Längskante 21 geschweißt. Anschließend wird die Kiste 20 entnommen, um eine senkrecht zur Längsmittenachse und durch die Mitte des Werkstücks verlaufende Drehachse **24** gedreht und eingespannt, so dass die Längskante **25** mit den gleichen Einstellungen des Lasers wie bei der Längskante 21 geschweißt werden kann. Die Möglichkeit der "Spiegelung" entsteht durch einen Auflagebalken, welcher die Auflage der Kiste 20 vom linken oder rechten freien Ende zulässt. Winkellage und Abstandslage der Laserschweißoptik bleiben für die gesamte Bearbeitung in derselben Position. In einem letzten Schritt wird die Kiste um 180° gedreht (Drehachse **22**). Danach wird die Kiste 20 erneut eingespannt, und die Längskante **26** wird mit den gleichen Einstellungen wie bei der Längskante 21 (Laserstrahl **27** unter einem Winkel α von ca. 20°) geschweißt.

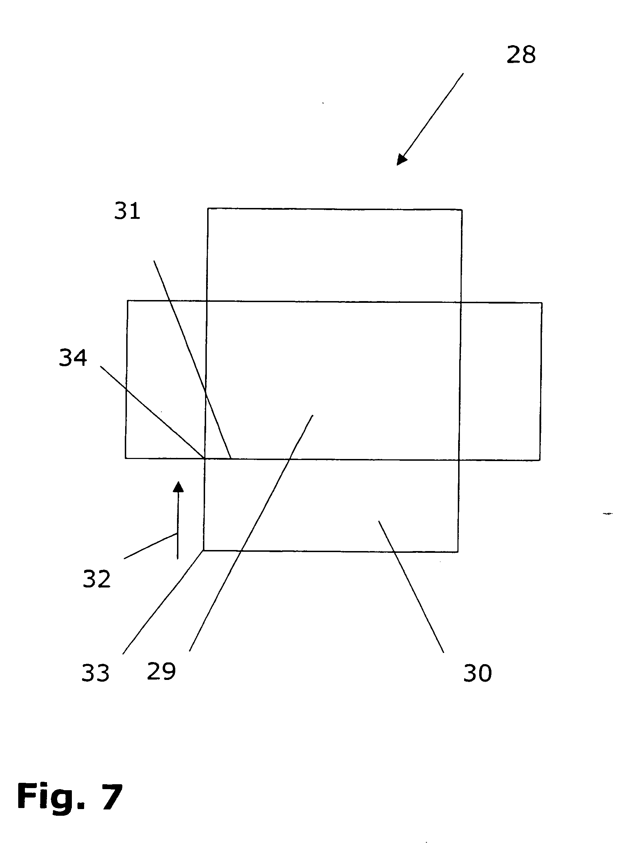

**Fig. 7** veranschaulicht die oben erwähnte Schweißrichtung (hier Bezugszeichen **32**) von außen in Richtung der am besten gespannten Kistenecke. Eine Kiste mit einem Kistenboden **29** und Kistenseitenwänden **30** kann aus einem Blechzuschnitt **28** gefertigt werden. Die Kistenseitenwände 30 und der Kistenboden 29 werden entlang einer Abkantlinie **31** abgekantet (analog für die weiteren Seiten), so dass eine zu schweißende Längsnaht entsteht. Anschließend soll erfindungsgemäß in Richtung 32, d.h. ausgehend von einer äußeren Ecke **33** in Richtung der dem Kistenboden 29 zugeordneten Ecke **34**, geschweißt werden.

### BEZUGSZEICHENLISTE

- 1: Laserbearbeitungsmaschine
- 2: Kiste
- 3: Kiste
- 4: Laserschweißoptik
- 5: Haube
- 6: Führung
- 7: Haubenführung
- 8: Doppelpfeil
- 9: Auflageelement
- 9': Auflageelement
- 10: Spannbalken
- 11: Spannbalken
- 12: Ausnehmung
- 13: Rand
- 14: Tisch
- 15: Auflagebalken
- 16: Schenkel
- 17: Schenkel
- 18: Laserstrahl
- 19: Längskante
- 20: Kiste
- 21: Längskante
- 22: Erste Drehachse
- 23: Längskante
- 24: Zweite Drehachse
- 25: Längskante
- 26: Längskante
- 27: Laserstrahl
- 28: Blechzuschnitt
- 29: Kistenboden
- 30: Kistenseitenwand
- 31: Abkantlinie
- 32: Schweißrichtung
- 33: Kistenecke
- 34: Kistenecke

## Patentansprüche

1. Laserbearbeitungsmaschine (1) zum Erzeugen linearer Schweißnähte (19; 21, 23, 25, 26) an einem als Kiste oder als ähnlich aufgebauter Gegenstand ausgebildeten Werkstück (2; 3; 20), umfassend:
eine Laserschweißoptik (4),
eine Werkstückauflage für das Werkstück (2; 3; 20),
sowie Spannmittel (10, 11) zum Spannen des Werkstücks (2; 3; 20) gegen die Werkstückauflage,
**dadurch gekennzeichnet,**
**dass** die Laserschweißoptik (4) linear verschiebbar geführt ist,
**dass** die Werkstückauflage jeweils durch mindestens ein Auflageelement (9) auf jedem freien Balkenenden eines Auflagebalkens (15) gebildet ist, welcher Auflageelement sich parallel zur Verschieberichtung (8) der Laserschweißoptik (4) erstreckt, und
**dass** die Spannmittel (10, 11) das Werkstück (2; 3; 20), welches von einer offenen Werkstückseite her auf das eine oder das andere Balkenende und auf das darauf angeordnete mindestens eine Auflageelement (9) aufgeschoben ist, gegen das mindestens eine Auflageelement (9) spannen können.

2. Laserbearbeitungsmaschine nach Anspruch 1, **dadurch gekennzeichnet, dass** die Spannmittel durch zwei Spannbalken (10,11) ausgebildet sind.

3. Laserbearbeitungsmaschine nach einem der vorhergehenden Ansprüche, **dadurch gekennzeichnet, dass** Mittel zum spiegelsymmetrischen Spannen des Werkstücks (2; 3; 20) vorgesehen sind.

4. Laserbearbeitungsmaschine nach einem der vorhergehenden Ansprüche, **dadurch gekennzeichnet, dass** ein Sensor zur Erfassung der Schweißnahtlänge und Mittel zur Speicherung der erfassten Daten vorgesehen sind.

5. Verfahren zum Laserschweißen von vier Längskanten (21, 23, 25, 26) eines Werkstücks (20), mit dem folgenden Ablauf von Verfahrensschritten:
i) Auflegen des Werkstücks (20) von einer offenen Werkstückseite her auf eines der beiden freien Balkenenden eines Auflagebalkens (15);
ii) Spannen des Werkstücks (20) gegen mindestens ein auf dem Balkenende angeordnetes Auflageelement (9);
iii) Einstellen einer Laserschweißoptik (4) hinsichtlich Winkellage und/oder Abstand zum Werkstück (20);
iv) Schweißen der ersten Längskante (21);
v) Drehen des Werkstücks (20) um 180° bezüglich einer ersten **durch** seine Längsmittenachse definierten Drehachse (22);
vi) Schweißen der zweiten Längskante (23);
vii) erneutes Spannen des Werkstücks (20) nach dessen Drehung um 180° bezüglich einer zweiten senkrecht zu seiner Längsmittenachse und durch die Mitte des Werkstücks (20) verlaufenden Drehachse (24);
viii) Schweißen der dritten Längskante (25);
ix) Drehen des Werkstücks (20) um 180° bezüglich der ersten Drehachse (22);
x) Schweißen der vierten Längskante (26).

6. Verfahren nach Anspruch 5, **dadurch gekennzeichnet, dass** die Schweißnahtlänge erfasst wird.

7. Verfahren nach Anspruch 5 oder 6, **dadurch gekennzeichnet, dass** der Schweißvorgang ausgehend von einer der Werkstücköffnung, wie beispielsweise der Kistenöffnung, zugeordneten Kante (33), welche einer dem Werkstückboden zugeordneten Werkstückecke (34) gegenüberliegt, in Richtung dieser Werkstückecke (34) durchgeführt wird.

## Claims

1. Laser processing machine (1) for producing linear weld seams (19; 21, 23, 25, 26) on a workpiece (2; 3; 20) which is constructed as a box or as a similarly constructed object, comprising:
an optical laser welding unit, (4),
a workpiece support for the workpiece (2; 3; 20),
and clamping means (10, 11) for clamping the workpiece (2; 3; 20) against the workpiece support,
**characterised in that**
the optical laser welding unit (4) is guided in a linearly displaceable manner,
**in that** the workpiece support is formed in each case by at least one support element (9) on each free bar end of a support bar (15), which support element extends parallel with the displacement direction (8) of the optical laser welding unit (4),
and
**in that** the clamping means (10, 11) can clamp the workpiece (2; 3; 20), which is pushed from an open workpiece side onto one or the other bar end and onto the at least one support element (9) which is arranged thereon, against the at least one support element (9).

2. Laser processing machine according to claim 1, **characterised in that** the clamping means are formed by means of two clamping bars (10, 11).

3. Laser processing machine according to either of the preceding claims, **characterised in that** means for clamping the workpiece (2; 3; 20) in a mirror-symmetrical manner are provided.

4. Laser processing machine according to any one of the preceding claims, **characterised in that** a sensor for establishing the length of the weld seam and means for storing the established data are provided.

5. Method for laser welding four longitudinal edges (21, 23, 25, 26) of a workpiece (20), having the following sequence of method steps:
i) placing the workpiece (20) from an open workpiece side onto one of the two free bar ends of a support bar (15);
ii) clamping the workpiece (20) against at least one support element (9) which is arranged on the bar end;
iii) adjusting an optical laser welding unit (4) with respect to angular position and/or spacing with respect to the workpiece (20);
iv) welding the first longitudinal edge (21);
v) rotating the workpiece (20) through 180° with respect to a first axis of rotation (22) which is defined by the longitudinal centre axis thereof;
vi) welding the second longitudinal edge (23);
vii) clamping the workpiece (20) again after it has been rotated through 180° with respect to a second axis of rotation (24) which extends perpendicularly relative to the longitudinal centre axis thereof and through the centre of the workpiece (20);
viii) welding the third longitudinal edge (25);
ix) rotating the workpiece (20) through 180° with respect to the first axis of rotation (22);
x) welding the fourth longitudinal edge (26).

6. Method according to claim 5, **characterised in that** the length of the weld seam is established.

7. Method according to claim 5 or claim 6, **characterised in that** the welding operation, starting from an edge (33) which is associated with the workpiece opening, such as, for example, the box opening, and which is opposite a workpiece corner (34) associated with the workpiece base, is carried out in the direction of this workpiece corner (34).

## Revendications

1. Machine d'usinage au laser (1) pour produire des joints de soudure linéaires (19 ; 21, 23, 25, 26) sur une pièce (2 ; 3 ; 20) sous la forme d'une caisse ou d'un objet de structure analogue, comprenant :
une optique de soudage au laser (4),
un support de pièce pour la pièce (2 ; 3 ; 20),
ainsi que des moyens de serrage (10, 11) pour serrer la pièce (2 ; 3 ; 20) contre le support de pièce,
**caractérisée en ce que** l'optique de soudage au laser (4) est guidée en déplacement linéaire,
**en ce que** le support de pièce est respectivement formé par au moins un élément de support (9) sur chaque extrémité libre d'une barre de support (15), élément qui s'étend parallèlement à la direction de déplacement (8) de l'optique de soudage au laser (4),
et **en ce que** les moyens de serrage (10, 11) peuvent serrer contre l'élément de support au moins unique (9) la pièce (2 ; 3 ; 20) qui est enfilée par un côté ouvert de la pièce sur l'une ou l'autre des extrémités de la barre et sur l'élément de support au moins unique (9) disposé sur cette extrémité.

2. Machine d'usinage au laser selon la revendication 1, **caractérisée en ce que** les moyens de serrage sont formés par deux barres de serrage (10, 11).

3. Machine d'usinage au laser selon l'une des revendications précédentes, **caractérisée en ce qu'**il est prévu des moyens pour le serrage symétrique de la pièce (2 ; 3 ; 20).

4. Machine d'usinage au laser selon l'une des revendications précédentes, **caractérisée en ce qu'**il est prévu un capteur pour déterminer la longueur du joint de soudure et des moyens pour mémoriser les données déterminées.

5. Procédé de soudage au laser de quatre bords longitudinaux (21, 23, 25, 26) d'une pièce (20), avec la succession d'étapes suivante :
i) pose de la pièce (20), par un côté ouvert de la pièce, sur une des deux extrémités libres d'une barre de support (15) ;
ii) serrage de la pièce (20) contre au moins un élément de support (9) disposé sur l'extrémité de la barre ;
iii) réglage d'une optique de soudage au laser (4) quant à sa position angulaire et/ou sa distance par rapport à la pièce (20) ;
iv) soudage du premier bord longitudinal (21) ;
v) rotation de la pièce (20) de 180° par rapport à un premier axe de rotation (22) défini par son axe médian longitudinal ;
vi) soudage du deuxième bord longitudinal (23) ;
vii) nouveau serrage de la pièce (20) après sa rotation de 180° par rapport à un deuxième axe de rotation (24) passant par le milieu de la pièce (20) et perpendiculaire à son axe médian longitudinal ;
viii) soudage du troisième bord longitudinal (25) ;
ix) rotation de la pièce (20) de 180° par rapport au premier axe de rotation (22) ;
x) soudage du quatrième bord longitudinal (26).

6. Procédé selon la revendication 5, **caractérisé en ce qu'**on détermine la longueur du joint de soudure.

7. Procédé selon la revendication 5 ou 6, **caractérisé en ce que** l'opération de soudage est effectuée, en partant d'un bord (33) associé à l'ouverture de la pièce - par exemple à l'ouverture de la caisse - qui est opposé à un coin de pièce (34) associé au fond de la pièce, en direction de ce coin de caisse (34).
